# EUROPÄISCHE PATENTSCHRIFT

(11) **EP 2 930 664 B1**
(45) Veröffentlichungstag und Bekanntmachung des Hinweises auf die Patenterteilung: **10.10.2018**
(21) Anmeldenummer: 15000817.5
(22) Anmeldetag: 19.03.2015
(51) Int. Cl.: G06K 19/077

(54) **Chipmodul mit Umverdrahtungsschicht**
CHIP MODULE WITH REWIRING LAYER
MODULE DE PUCE DOTÉ DE COUCHE DE RECÂBLAGE

(30) Priorität: 07.04.2014 DE 102014005142
(43) Veröffentlichungstag der Anmeldung: 14.10.2015
(73) Patentinhaber: Giesecke+Devrient Mobile Security GmbH, 81677 München (DE)
(72) Erfinder: Adler, Cliff, 81929 München (DE); Griesmeier, Robert, 83052 Bruckmühl (DE); Reinl, Markus, 81827 München (DE)

(56) Entgegenhaltungen:
- WO-A1-03/017196
- DE-A1- 10 133 959
- DE-A1- 10 311 696
- DE-A1-102013 107 725
- US-A1- 2005 051 905

## Beschreibung

Die Erfindung beschreibt Chipmodul mit Umverdrahtungsschicht und ein entsprechendes Herstellungsverfahren.

Aus dem Stand der Technik ist zur Herstellung von tragbaren Datenträgern, wie z.B. Smart Cards, Kreditkarten, Krankenversicherungskarten, bekannt, dass ein Chipmodul in einen Kartenkörper eingesetzt und mit diesem fest verbunden wird. Ein Chipmodul besteht im Prinzip aus einem Träger, auf dessen einer Seite ein Kontaktflächenelement mit mehreren Kontakten, z.B. gemäß ISO 7816, und auf dessen anderen gegenüberliegenden Seite ein Chip angeordnet ist. Der Chip weist mehrere Anschlüsse auf, die mit den Kontakten des Kontaktflächenelements elektrisch leitend verbunden sind, z.B. mittels Flip-Chip- oder Wire-Bond-Technologie. Um eine elektrisch leitende Verbindung zwischen den Anschlüssen des Chips und den Kontakten des Kontaktflächenelements herzustellen, weist der Träger auf seiner dem Kontaktflächenelement gegenüberliegenden Seite ein Anschlusslayout auf. Das Anschlusslayout ist, insbesondere bei Flip-Chip-Modulen, auf die Position der Anschlüsse des verwendeten Chips ausgelegt und befindet sich zwischen Träger und Chip.

Bei der Herstellung von Chipmodulen werden unterschiedliche Chips verwendet, wobei die Anschlüsse sich je nach Chip an unterschiedlichen Positionen befinden. Dies führt dazu, dass ein Anschlusslayout in Abhängigkeit von der Position der Anschlüsse des jeweils verwendeten Chips angepasst werden muss. Dies führt dazu, dass eine Anpassung des Anschlusslayouts an neue Chips bzw. an die Positionen der Anschlüsse des neuen Chips, sehr aufwändig ist. Außerdem gibt es sehr hohe Mindestbestellmengen für einen Träger mit einem bestimmten Anschlusslayout für einen bestimmten Chip.

Ein Wechsel auf einen neuen Chip ist damit sehr zeit- und kostenintensiv, da ein neuer Träger mit einem neuen Anschlusslayout hergestellt werden muss. Ausgehend von den Nachteilen des Stands der Technik ist es Aufgabe der Erfindung eine Lösung zu finden, welche die beschriebenen Nachteile vermeidet. Anspruch 1 ist gegenüber DE10311696 A1 abgegrenzt.

Die Aufgabe der Erfindung wird durch den unabhängigen und den nebengeordneten Anspruch gelöst. Vorteilhafte Ausführungen sind in den abhängigen Ansprüchen beschrieben.

Ein vorteilhaftes Ausführungsbeispiel ist, dass der Chip auf der Umverdrahtungsschicht angeordnet ist.

Ein weiteres vorteilhaftes Ausführungsbeispiel ist, dass die Umverdrahtungsschicht auf einem Substrat angeordnet ist.

Ein weiteres vorteilhaftes Ausführungsbeispiel ist, dass der Chip zwischen dem Substrat und dem Träger angeordnet ist.

Ein weiteres vorteilhaftes Ausführungsbeispiel ist, dass die Umverdrahtungsschicht auf mindestens einem zweiten Kontakt des Trägers angeordnet ist.

Ein weiteres vorteilhaftes Ausführungsbeispiel ist, dass der mindestens eine erste Kontakt des Trägers ein Kontaktflächenfeld gemäß ISO 7816 ist.

Ein weiteres vorteilhaftes Ausführungsbeispiel ist, dass das Sicherheitsmodul ein tragbarer Datenträger ist.

Ein weiteres vorteilhaftes Ausführungsbeispiel ist, dass der tragbare Datenträger eine Chipkarte ist.

Ferner offenbart die Erfindung zur Lösung der Aufgabe ein Verfahren zur Herstellung eines Chipmoduls gemäß der obigen Diskussion, wobei der Chip auf der Umverdrahtungsschicht angeordnet wird.

Ein weiteres vorteilhaftes Ausführungsbeispiel ist, dass die Umverdrahtungsschicht auf dem Substrat als eine Metallschicht mittels eines Ätz- oder Additivverfahrens hergestellt wird.

Ein weiteres vorteilhaftes Ausführungsbeispiel ist, dass die Umverdrahtungsschicht auf das Substrat mittels eines elektrisch leitfähigen Lacks oder einer elektrisch leitfähigen Paste gedruckt wird.

Ein weiteres vorteilhaftes Ausführungsbeispiel ist, dass die Umverdrahtungsschicht auf den mindestens einen zweiten Kontakt des Trägers mittels eines elektrisch leitfähigen Lacks oder einer elektrisch leitfähigen Paste gedruckt wird.

Ein weiteres vorteilhaftes Ausführungsbeispiel ist, dass als Umverdrahtungsschicht ein Metallrahmen verwendet wird, wobei der Metallrahmen auf einer Seite mindestens einen ersten Anschlusspunkt zur Verbindung mit mindestens einem zweiten Kontakt des Trägers und auf einer zweiten gegenüberliegenden Seite mindestens einen zweiten Anschlusspunkt zur Verbindung mit mindestens einem Anschluss des Chips aufweist, wobei mindestens zwischen dem ersten und dem zweiten Anschlusspunkt des Metallrahmens eine elektrisch leitende Verbindung besteht.

Ein weiteres vorteilhaftes Ausführungsbeispiel ist, dass die Umverdrahtungsschicht mit dem mindestens einen zweiten Kontakt des Trägers mittels Schweißen, Löten oder Leitkleben verbunden wird.

Ein weiteres vorteilhaftes Ausführungsbeispiel ist, dass das Substrat mit dem Träger mittels eines Laminier- oder eines Klebeverfahrens miteinander verbunden wird.

Im Folgenden wird die Erfindung anhand der beigefügten Figuren 1 bis 4 beschrieben.
Figur 1 zeigt einen Querschnitt eines Substrats 4 mit erfindungsgemäßer Umverdrahtungsschicht 6 und Chip 10, sogenanntes Inlay 2.
Figur 2 zeigt das erfindungsgemäße Inlay 2 bevor es mit einem Träger 12 verbunden wird.
Figur 3 zeigt einen Querschnitt eines Chipmoduls 18, nachdem das erfindungsgemäße Inlay 2 mit dem Träger 12 verbunden wurde.
Figur 4 zeigt ein Chipmodul mit einem alternativen Beispiel der Umverdrahtungsschicht 6, wenn sich dieses direkt auf den Kontakten 16 des Trägers 12 zur Herstellung einer elektrisch leitenden Verbindung mit dem Chip 10 befindet

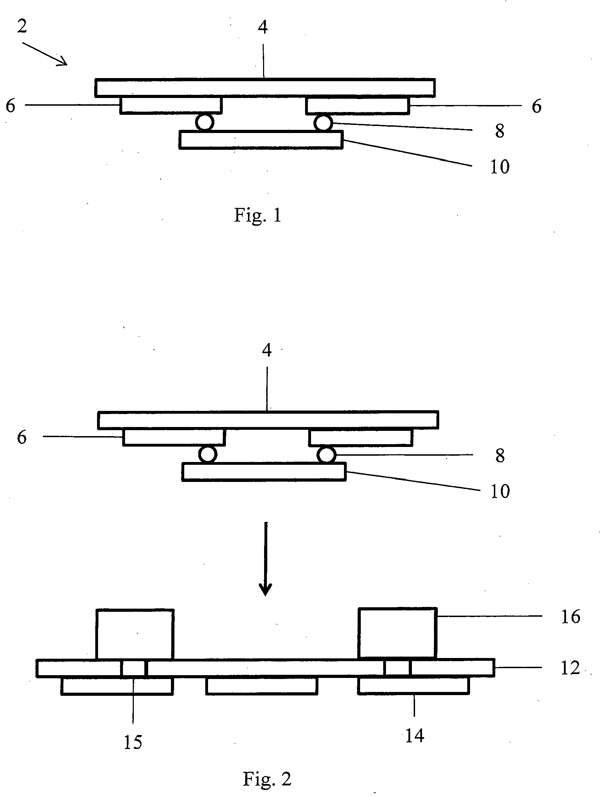

Figur 1 zeigt einen Querschnitt eines Substrats 4 mit erfindungsgemäßer Umverdrahtungsschicht 6 und Chip 10, einem sogenannten Inlay 2. Der Chip 10 weist mindestens einen Anschluss auf, der hier aus Gründen der Übersichtlichkeit nicht dargestellt ist. Der mindestens eine Anschluss des Chips 10 wird mittels einer geeigneten Verbindung 8, z.B. einer mittels Flip-Chip-Technologie hergestellten Verbindung, mit der Umverdrahtungsschicht 6 elektrisch leitend verbunden.

Die Umverdrahtungsschicht 6 kann durch Druck mit einer elektrisch leitfähigen Paste oder eines elektrisch leitfähigen Lacks hergestellt werden. Alternativ kann die Umverdrahtungsschicht 6 mittels eines Galvanik- oder Ätzverfahrens oder eines Additivverfahrens als Metallschicht hergestellt werden. Ferner kann als Umverdrahtungsschicht ein Metallrahmen verwendet werden, welcher eine Durchkontaktierung zur elektrischen Verbindung der Anschlüsse des Chips 10 mit Kontakten 14 eines Kontaktflächenelements, z.B. gemäß ISO 7816 aufweist.

Figur 2 zeigt das erfindungsgemäße Inlay 2 bevor es mit einem Träger 12 zu einem Chipmodul 18 verbunden wird. Der Träger 12 ist beispielsweise ein Band, sogenanntes Tape, um es leichter verarbeiten zu können, z.B. in einem Rolle-zu-Rolle-Verfahren. Auf einer Seite des Trägers 12 befindet sich mindestens ein erster Kontakt 14. Der mindestens eine erste Kontakt 14 bildet z.B. ein Kontaktflächenelement gemäß ISO 7816. Nach Einbau eines Chipmoduls, das aus dem Inlay 2 und dem Träger 12 mit den Kontakten 14 und 16 besteht, in ein Sicherheitsmodul befindet sich der mindestens eine erste Kontakt 14 auf der Außenseite eines Sicherheitsmoduls, z.B. einer Kreditkarte. Der mindestens eine erste Kontakt 14 ist mit einer leitenden Verbindung 15 verbunden, die sich durch den Träger 12 hindurch erstreckt. Auf der gegenüberliegenden Seite des Trägers 12 ist die Verbindung 15 mit mindestens einem zweiten Kontakt 16 verbunden. Der mindestens eine zweite Kontakt 16 dient zur Verbindung mit der Umverdrahtungsschicht 6 des Inlays 2.

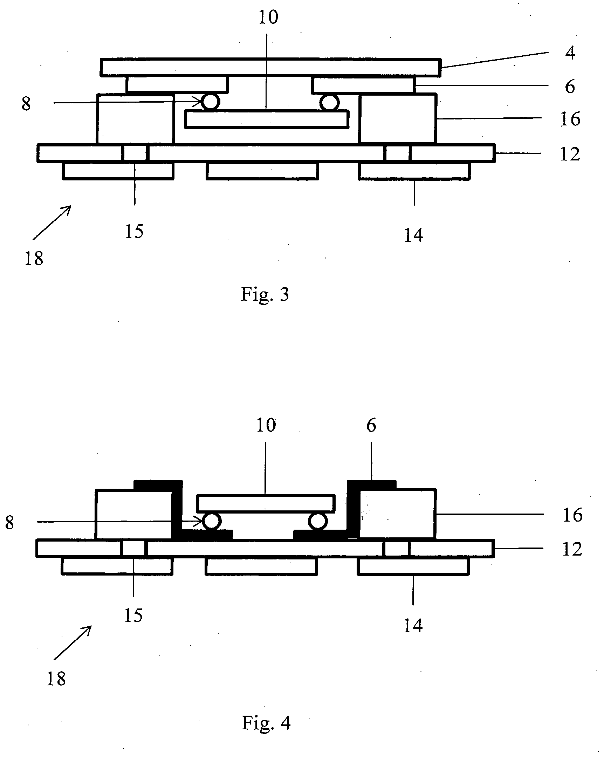

Figur 3 zeigt einen Querschnitt eines Chipmoduls 18, nachdem das erfindungsgemäße Inlay 2 mit dem Träger 12 verbunden wurde. Hier ist zu erkennen, dass die Umverdrahtungsschicht 6 mit mindestens einem zweiten Kontakt 16 elektrisch leitend verbunden ist. Die Verbindung zwischen der Umverdrahtungsschicht 6 und dem mindestens einen zweiten Kontakt 16 kann z.B. mittels Schweißen, Löten oder Kleben mittels eines elektrisch leitfähigen Klebstoffs erfolgen. Ferner können das Substrat 4 und der Träger 12 mittels Laminierung oder Klebung verbunden werden. Dazu muss eine geeignete Verbindung zwischen Substrat 4 und Träger 12 geschaffen werden, die hier aber nicht dargestellt ist.

Zur mechanischen Stabilisierung ist es empfehlenswert, wenn sich der Chip 10 zwischen dem Träger 12 und dem Substrat 4 befindet.

Figur 4 zeigt ein Chipmodul 18 mit einem alternativen Beispiel der Umverdrahtungsschicht 6, wenn sich dieses direkt auf den Kontakten 16 des Trägers 12 zur Herstellung einer elektrisch leitenden Verbindung mit dem Chip 10 befindet. Hier ist die Umverdrahtungsschicht 6 mittels eines Druckverfahrens auf den mindestens einen zweiten Kontakt 16 aufgedruckt worden. Zum Drucken wird beispielsweise eine elektrisch leitfähige Paste oder ein Lack verwendet. Der Chip 10 kann z.B. mittels eines Flip-Chip-Verfahrens mit der Umverdrahtungsschicht 6 elektrisch leitend verbunden werden, wobei die Verbindung 8 z.B. eine Lötverbindung ist, die mittels z.B. dem Flip-Chip-Verfahren hergestellt wird. Vorteilhaft ist, dass die Umverdrahtungsschicht 6 direkt z.B. in einer Flip-Chip-Anlage aufgedruckt werden kann. Dies ermöglicht eine sehr flexible Herstellung der Umverdrahtungsschicht 6, die an die jeweiligen Positionen der Anschlüsse des verwendeten Chips 10 angepasst ist.

Die Erfindung bietet den Vorteil, dass Träger 12 z.B. für Flip-Chip-Verfahren standardisiert werden können. Ferner ermöglicht die Erfindung ein schnelles Herstellen von Prototypen eines Chipmoduls 18 mit Chips 10, deren Anschlüsse jeweils unterschiedliche Positionen haben. Darüber hinaus können mit der Erfindung Kosten gespart werden, da größere Mengen von Träger 12 beim Hersteller eingekauft werden können, ohne auf einen bestimmten Chip 10 bzw. dessen Anschlusspositionen festgelegt zu sein. Außerdem kann die Umverdrahtungsschicht 6 mit der vorliegenden Erfindung wesentlich schneller, kostensparender und einfacher hergestellt werden, als dies im Stand der Technik möglich ist.

### Bezugszeichenliste

- 2: Inlay
- 4: Substrat
- 6: Umverdrahtungsschicht
- 8: Verbindung zwischen Anschluss des Chips und Umverdrahtungsschicht
- 10: Chip
- 12: Träger, z.B. als Tape
- 14: erster Kontakt, z.B. ISO-Kontakt, des Trägers 12
- 15: leitende Verbindung, welche eine elektrisch leitende Verbindung zwischen dem ersten und zweiten Kontakt herstellt
- 16: zweiter Kontakt des Trägers 12
- 18: Chipmodul

## Patentansprüche

1. Chipmodul (18) zum Einbau in ein Sicherheitsmodul, wobei das Chipmodul (18) umfasst
einen Träger (12),
mindestens einen ersten Kontakt (14), welcher auf einer ersten Seite des Trägers (12) angeordnet ist, wobei der mindestens eine erste Kontakt (14) nach dem Einbau des Chipmoduls (18) in ein Sicherheitsmodul sich auf einer Außenseite des Sicherheitsmoduls befindet,
mindestens einen zweiten Kontakt (16), welcher auf einer zweiten Seite des Trägers (12) angeordnet ist, wobei die erste Seite der zweiten Seite des Trägers (12) gegenüberliegend angeordnet ist, wobei der mindestens eine zweite Kontakt (16) nach dem Einbau des Chipmoduls (18) in das Sicherheitsmodul sich auf einer Innenseite des Sicherheitsmoduls befindet,
mindestens eine elektrisch leitende Verbindung (15), welche den mindestens einen ersten Kontakt (14) mit dem mindestens einen zweiten Kontakt (16) durch den Träger (12) hindurch verbindet,
mindestens einen Chip (10), wobei der Chip (10) mindestens einen Anschluss aufweist, welcher mit dem mindestens einen zweiten Kontakt (16) elektrisch leitend verbunden ist,
mindestens eine Umverdrahtungsschicht (6) zwischen dem mindestens einen Anschluss des Chips (10) und dem mindestens einen zweiten Kontakt (16) des Trägers (12) angeordnet ist,
wobei die Umverdrahtungsschicht (6) eine elektrisch leitende Verbindung (8) zwischen dem mindestens einen Anschluss des Chips (10) und dem mindestens einen zweiten Kontakt (16) des Trägers (12) bildet,
wobei die Umverdrahtungsschicht (6) dazu dient ein Layout des mindestens einen zweiten Kontakts (16) des Trägers (12) auf ein Layout des mindestens einen Anschlusses des Chips (10) anzupassen, **dadurch gekennzeichnet, dass** die Umverdrahtungsschicht (6) auf einem Substrat (4) angeordnet ist,
wobei der Chip (10) zwischen dem Substrat (4) und dem Träger (12) angeordnet ist.

2. Chipmodul (18) nach Anspruch 1, **dadurch gekennzeichnet dass** der Chip (10) auf der Umverdrahtungsschicht (6) angeordnet ist.

3. Chipmodul (18) nach einem der vorherigen Ansprüche 1 bis 2, **dadurch gekennzeichnet dass** die Umverdrahtungsschicht (6) auf mindestens einem zweiten Kontakt (16) des Trägers (12) angeordnet ist.

4. Chipmodul (18) nach einem der vorherigen Ansprüche 1 bis 3, **dadurch gekennzeichnet dass** der mindestens eine erste Kontakt (14) des Trägers (12) ein Kontaktflächenfeld gemäß ISO 7816 ist.

5. Chipmodul (18) nach einem der vorherigen Ansprüche 1 bis 4, **dadurch gekennzeichnet dass** das Sicherheitsmodul ein tragbarer Datenträger ist.

6. Chipmodul (18) nach einem der vorherigen Ansprüche 1 bis 5, **dadurch gekennzeichnet dass** der tragbare Datenträger eine Chipkarte ist.

7. Verfahren zur Herstellung eines Chipmoduls (18) gemäß den Ansprüchen 1 bis 6, **dadurch gekennzeichnet, dass** der Chip (10) auf der Umverdrahtungsschicht (6) angeordnet wird.

8. Verfahren nach Anspruch 7, **dadurch gekennzeichnet, dass** die Umverdrahtungsschicht (6) auf dem Substrat (4) als eine Metallschicht mittels eines Ätz- oder Additivverfahrens hergestellt wird.

9. Verfahren nach Anspruch 7, **dadurch gekennzeichnet, dass** die Umverdrahtungsschicht (6) auf das Substrat (4) mittels eines elektrisch leitfähigen Lacks oder einer elektrisch leitfähigen Paste gedruckt wird.

10. Verfahren nach Anspruch 7, **dadurch gekennzeichnet, dass** die Umverdrahtungsschicht (6) auf den mindestens einen zweiten Kontakt (16) des Trägers (12) mittels eines elektrisch leitfähigen Lacks oder einer elektrisch leitfähigen Paste gedruckt wird.

11. Verfahren nach Anspruch 7, **dadurch gekennzeichnet, dass** als Umverdrahtungsschicht (6) ein Metallrahmen verwendet wird,
wobei der Metallrahmen auf einer Seite mindestens einen ersten Anschlusspunkt zur Verbindung mit mindestens einem zweiten Kontakt (16) des Trägers (12) und auf einer zweiten gegenüberliegenden Seite mindestens einen zweiten Anschlusspunkt zur Verbindung mit mindestens einem Anschluss des Chips (10) aufweist,
wobei mindestens zwischen dem ersten und dem zweiten Anschlusspunkt des Metallrahmens eine elektrisch leitende Verbindung besteht.

12. Verfahren nach einem der Ansprüche 7 bis 11, **dadurch gekennzeichnet, dass** die Umverdrahtungsschicht (6) mit dem mindestens einen zweiten Kontakt (16) des Trägers (12) mittels Schweißen, Löten oder Leitkleben verbunden wird.

13. Verfahren nach einem der Ansprüche 7 bis 12, **dadurch gekennzeichnet, dass** das Substrat (4) mit dem Träger (12) mittels eines Laminier- oder eines Klebeverfahrens miteinander verbunden wird.

## Claims

1. A chip module (18) for installation in a security module, wherein the chip module (18) comprises
a carrier (12),
at least one first contact (14) which is arranged on a first side of the carrier (12), wherein the at least one first contact (14) after the installation of the chip module (18) in a security module is located on an outer side of the security module,
at least a second contact (16) which is arranged on a second side of the carrier (12), wherein the first side is arranged opposite of the second side of the carrier (12), wherein after the installation of the chip module (18) in the security module the at least one second contact (16) is located on an inner side of the security module,
at least one electroconductive connection (15) which connects the at least one first contact (14) to the at least one second contact (16) through the carrier (12),
at least one chip (10), wherein the chip (10) has at least one terminal which is electroconductively connected to the at least one second contact (16),
at least one rewiring layer (6) is arranged between the at least one terminal of the chip (10) and the at least one second contact (16) of the carrier (12),
wherein the rewiring layer (6) forms an electroconductively connection (8) between the at least one terminal of the chip (10) and the at least one second contact (16) of the carrier (12),
wherein the rewiring layer (6) serves to adapt a layout of the at least one second contact (16) of the carrier (12) to a layout of the at least one terminal of the chip (10),
**characterized in that**
the rewiring layer (6) is arranged on a substrate (4),
wherein the chip (10) is arranged between the substrate (4) and the carrier (12).

2. The chip module (18) according to claim 1, **characterized in that** the chip (10) is arranged on the rewiring layer (6).

3. The chip module (18) according to any of the above claims 1 to 2, **characterized in that** the rewiring layer (6) is arranged on at least a second contact (16) of the carrier (12).

4. The chip module (18) according to any of the above claims 1 to 3, **characterized in that** the at least one first contact (14) of the carrier (12) is a contact field according to ISO 7816.

5. The chip module (18) according to any of the above claims 1 to 4, **characterized in that** the security module is a portable data carrier.

6. The chip module (18) according to any of the above claims 1 to 5, **characterized in that** the portable data carrier is a chip card.

7. A method for manufacturing a chip module (18) according to the claims 1 to 6, **characterized in that** the chip (10) is arranged on the rewiring layer (6).

8. The method according to claim 7, **characterized in that** the rewiring layer (6) on the substrate (4) is manufactured as a metal layer by means of an etching method or additive process.

9. The method according to claim 7, **characterized in that** the rewiring layer (6) is printed on the substrate (4) by means of an electrically conductive lacquer or an electrically conductive paste.

10. The method according to claim 7, **characterized in that** the rewiring layer (6) is printed on the at least one second contact (16) of the carrier (12) by means of an electrically conductive lacquer or an electrically conductive paste.

11. The method according to claim 7, **characterized in that** a metal frame is employed as the rewiring layer (6),
wherein the metal frame has on one side at least one first terminal point for connecting to at least one second contact (16) of the carrier (12) and on a second, opposing side at least one second terminal point for connecting to at least one terminal of the chip (10),
wherein an electroconductive connection exists at least between the first one and the second terminal point of the metal frame.

12. The method according to any of claims 7 to 11, **characterized in that** the rewiring layer (6) is connected to the at least one second contact (16) of the carrier (12) by means of welding, soldering or conductive bonding.

13. The method according to any of claims 7 to 12, **characterized in that** the substrate (4) is interconnected with the carrier (12) by means of a laminating method or a gluing method.

## Revendications

1. Module puce (18) destiné à l'insertion dans un module de sécurité, le module puce (18) comprenant
un support (12)
au moins un premier contact (14) agencé sur une première face du support (12), le au moins un premier contact (14) se trouvant, après l'insertion du module puce (18) dans un module de sécurité, sur une face extérieure du module de sécurité,
au moins un deuxième contact (16) agencé sur une deuxième face du support (12), la première face étant agencée à l'opposé de la deuxième face du support (12), le au moins un deuxième contact (16) se trouvant, après l'insertion du module puce (18) dans le module de sécurité, sur une face intérieure du module de sécurité,
au moins une liaison électroconductrice (15) qui relie le au moins un premier contact (14) au au moins un deuxième contact (16) à travers le support (12),
au moins une puce (10), la puce (10) comportant au moins un raccordement relié de manière électroconductrice avec le au moins un deuxième contact (16),
au moins une couche de recâblage (6) agencée entre le au moins un raccordement de la puce (10) et le au moins un deuxième contact (16) du support (12),
cependant que la couche de recâblage (6) constitue une liaison électroconductrice (8) entre le au moins un raccordement de la puce (10) et le au moins un deuxième contact (16) du support (12),
cependant que la couche de recâblage (6) sert à adapter un layout du au moins un deuxième contact (16) du support (12) à un layout du au moins un raccordement de la puce (10),
**caractérisé en ce que** la couche de recâblage (6) est agencée sur un substrat (4),
cependant que la puce (10) est agencée entre le substrat (4) et le support (12).

2. Module puce (18) selon la revendication 1, **caractérisé en ce que** la puce (10) est agencée sur la couche de recâblage (6).

3. Module puce (18) selon une des revendications précédentes de 1 à 2, **caractérisé en ce que** la couche de recâblage (6) est agencée sur au moins un deuxième contact (16) du support (12).

4. Module puce (18) selon une des revendications précédentes de 1 à 3, **caractérisé en ce que** le au moins un premier contact (14) du support (12) est un champ de surfaces de contact conformément à ISO 7816.

5. Module puce (18) selon une des revendications précédentes de 1 à 4, **caractérisé en ce que** le module de sécurité est un support de données portable.

6. Module puce (18) selon une des revendications précédentes de 1 à 5, **caractérisé en ce que** le support de données portable est une carte à puce.

7. Procédé de fabrication d'un module puce (18) suivant les revendications de 1 à 6, **caractérisé en ce que** la puce (10) est agencée sur la couche de recâblage (6).

8. Procédé selon la revendication 7, **caractérisé en ce que** la couche de recâblage (6) est générée sur le substrat (4) sous forme d'une couche métallique au moyen d'un procédé de décapage ou additif.

9. Procédé selon la revendication 7, **caractérisé en ce que** la couche de recâblage (6) est imprimée sur le substrat (4) au moyen d'un vernis électroconducteur ou d'une pâte électroconductrice.

10. Procédé selon la revendication 7, **caractérisé en ce que** la couche de recâblage (6) est imprimée sur le au moins un deuxième contact (16) du support (12) au moyen d'un vernis électroconducteur ou d'une pâte électroconductrice.

11. Procédé selon la revendication 7, **caractérisé en ce que**, en tant que couche de recâblage (6), c'est une cadre métallique qui est utilisé,
cependant que le cadre métallique comporte sur une face au moins un premier point de raccordement pour la liaison avec au moins un deuxième contact (16) du support (12), et sur une deuxième face opposée au moins un deuxième point de raccordement pour la liaison avec au moins un raccordement de la puce (10),
cependant que, au moins entre le premier et le deuxième point de raccordement du cadre métallique, il y a une liaison électroconductrice.

12. Procédé selon une des revendications de 7 à 11, **caractérisé en ce que** la couche de recâblage (6) est reliée avec le au moins deuxième contact (16) du support (12) par soudage, brasage ou collage conducteur.

13. Procédé selon une des revendications de 7 à 12, **caractérisé en ce que** le substrat (4) est joint au support (12) au moyen d'un procédé de laminage ou de collage l'un à l'autre.
